**Europäisches Patentamt**

**European Patent Office**

**Office européen des brevets**

(19)

(11) Veröffentlichungsnummer: **0 109 045**

**B1**

(12) # EUROPÄISCHE PATENTSCHRIFT

(45) Veröffentlichungstag der Patentschrift:
**25.10.89**

(51) Int. Cl.⁴: **H 04 L 25/12**, H 04 L 25/04

(21) Anmeldenummer: **83111190.1**

(22) Anmeldetag: **09.11.83**

(54) **Automatisch sich auf die Kabellänge einstellende Entzerreranordnung.**

(30) Priorität: **11.11.82 DE 3241813**

(43) Veröffentlichungstag der Anmeldung:
**23.05.84 Patentblatt 84/21**

(45) Bekanntmachung des Hinweises auf die Patenterteilung:
**25.10.89 Patentblatt 89/43**

(84) Benannte Vertragsstaaten:
**AT BE CH DE FR GB IT LI NL SE**

(56) Entgegenhaltungen:
**GB-A-2 016 249**

(73) Patentinhaber: **Siemens Aktiengesellschaft, Wittelsbacherplatz 2, D-8000 München 2 (DE)**

(72) Erfinder: **Dömer, Josef, Ing.grad., Flossgatter 18, D-8021 Hohenschäftlarn (DE)**
Erfinder: **Härle, Hans Georg, Dipl.- Ing., Haldenweg 4, D-8901 Leitershofen (DE)**

**Beschreibung**

Die Erfindung betrifft eine automatisch sich auf die Kabellänge einstellende Entzerreranordnung gemäß dem Oberbegriff des Patentanspruches 1.

Digitalsignal-Regeneratoren in Übertragungssystemen mit Koaxialkabeln als Übertragungsmedium haben am Eingang einen automatischen Dämpfungsentzerrer zum Ausgleich der Verzerrungen, die durch die frequenzabhängige Kabeldämpfung entstehen. Als Regelkriterium für die Anpassung des Entzerrers an die Länge des Kabels wird in der Regel die Amplitude des entzerrten Signals, z. B. die Amplitude des Signals am Entscheider, verwendet. Diese Impulsamplitude muß möglichst unabhängig vom Eingangspattern sein. Dieses ist nur der Fall, wenn eine bestimmte Bandbegrenzung im Entzerrer eingehalten wird. Zur Störsignal- und Rauschsignalunterdrückung ist man jedoch auf eine stärkere Bandbegrenzung angewiesen, die im Signalweg in Abhängigkeit vom Eingangspattern zu unterschiedlichen Impulshöhen führt.

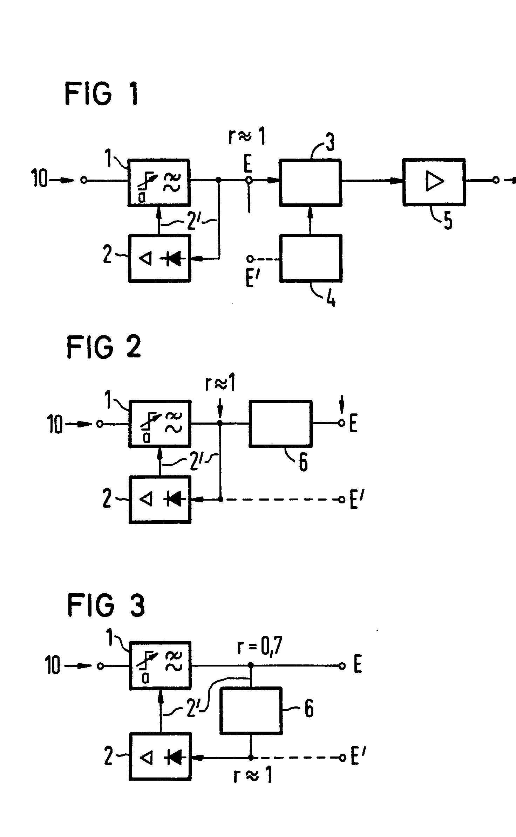

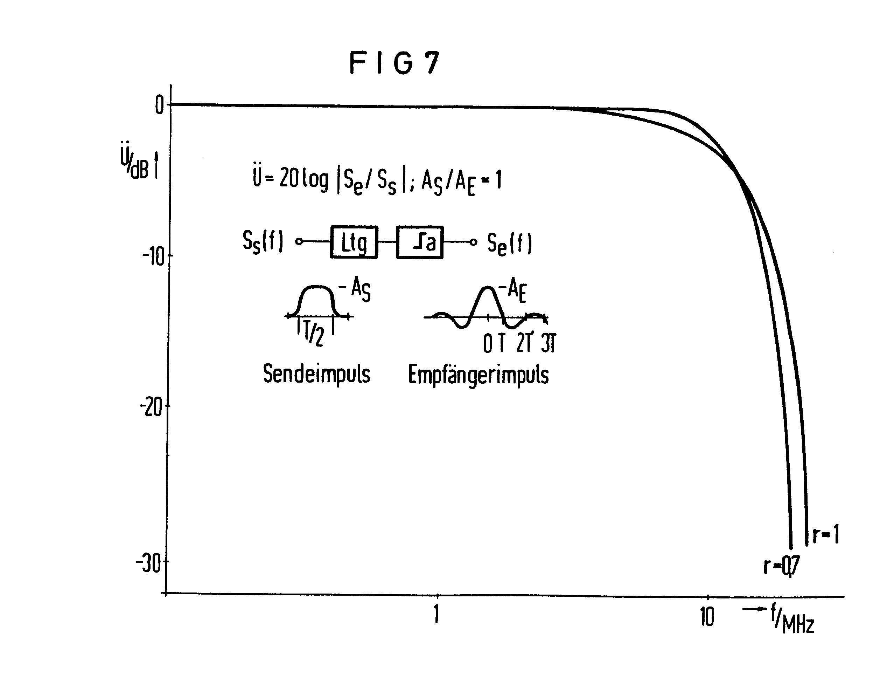

Die zur Störminderung notwendige Bandbegrenzung wird üblicherweise als Roll-Off-Bandbegrenzung ausgeführt, wie sie beispielsweise in dem Buch von P. Bocker: "Datenübertragung", Bd. 1, Seiten 98 bis 114 (Springer Verlag 1978) beschrieben ist. Übertragungssysteme für höhere Bitraten, wie z. B. 34 Mbit/s, sind bei den dort gegebenen Feldlängen und Sendeleistungen nur mit einem Roll-Off-Faktor möglich, der kleiner ist als 1, so daß also r <1 gilt. Diese Tatsache führt zu Signalüberschwingern, deren Höhe von der Impulsfolge abhängig ist. Im einzelnen wird dies später noch anhand der Fig. 1 erläutert. Eine weitere bekannte Anordnung, die den Nachteil der Impulsfolgeabhängigen Entzerrereinstellung vermeidet, ist in Fig. 2 detailliert erläutert. Die dabei insbesondere auftretenden Schwierigkeiten sind im folgenden zu sehen. Die maximale Verstärkung des entzerrenden Verstärkers für einen Roll-Off-Faktor vom Wert 1 ist größer und liegt bei einer höheren Frequenz als die eines Verstärkers für einen Roll-Off-Faktor vom Wert <1, in Fig. 7 ist dies noch dargestellt und erfordert insbesondere bei höheren Bitraten, wie z. B. 140 Mbit/s, mehr Aufwand. Weiterhin liegen im Signalweg zwei phasenentzerrte Filter, deren Toleranzen und Alterung direkt die Genauigkeit der Entzerrung und damit die Qualität des Regenerators beeinflussen.

Ferner ist es aus der GB-A-2 016 249 (vergleiche Figur 1; Seite 1, Zeilen 55 - 87; Seite 2, Zeilen 59 - 72) bekannt, ein Korrekturfilter (20) in der u.a. auch die Amplitude regelnden Regelschleife eines Entzerrers (10) so vorzusehen, daß das Ausgangssignal dieses Filters die Istgröße der Regelschleife darstellt.

Aufgabe der Erfindung ist es, eine automatische Entzerreranordnung anzugeben, bei der das Korrekturfilter nicht im Signalweg, sondern im Amplitudenregelkreis liegt, wodurch geringere Anforderungen an die Genauigkeit der Korrektur zu stellen sind; weiterhin braucht der Entzerrerverstärker nur für eine Bandbegrenzung mit einem Roll-Off-Faktor <1 realisiert werden; schließlich ist auch gewährleistet, daß das Korrekturfilter durch sein Tiefpaßverhalten für Frequenzen oberhalb des Übertragungsbandes Instabilitäten des gesamten Regelkreises bedämpft.

Gemäß der Erfindung wird diese Aufgabe nach den kennzeichnenden Merkmalen des Patentanspruches 1 gelöst.

Im Unteranspruch sind vorteilhafte Ausgestaltungen angegeben.

Anhand von Ausführungsbeispielen wird nachstehend die Erfindung noch näher erläutert.

Es zeigen in der Zeichnung:

Fig. 1     das Blockschaltbild eines bekannten Regenerators, wie es dem Grundkonzept nach in dem eingangs erwähnten Buch von Bocker "Datenübertragung" auch beschrieben ist;

Fig. 2     das Blockschaltbild des vorstehend ebenfalls erwähnten Entzerrers mit Bandbegrenzung für einen Roll-Off-Faktor von $r \approx 1$ und einem Korrekturfilter für $r = 1$ bzw. $r = 0,7$ im Signalweg;

Fig. 3     eine erfindungsgemäße Entzerreranordnung mit Korrekturfilter für $r = 0,7$ bzw. $r = 1$ in der Amplitudenregelschleife;

Fig. 4     die Augenbilder nach dem Entscheider und nach dem Roll-Off-Wandler, und zwar zeigt Fig. 4a diese Verhältnisse für einen RollOff-Faktor $r = 0,7$ und Fig. 4b zeigt diese Verhältnisse für einen Roll-Off-Faktor $r = 1$;

Fig. 5     die theoretische effektive Rauschbandbreite $B(r)$ und den Bandbreitengewinn $G(r) = 10 \cdot \log B(r=1)/B(r)$, bezogen auf $r = 1$ und abhängig vom Roll-Off-Faktor r eines Entzerrerverstärkers für eine Leitung mit $a/dB = 60 \cdot \sqrt{1/12,88}$ MHz;

Fig. 6     die theoretische Verstärkung des Entzerrers für $r = 1$ und $r = 0,7$;

Fig. 7     das Übertragungsmaß Ü von Leitung und Entzerrer für einen Roll-Off-Faktor $r = 1$ und $r = 0,7$ in Abhängigkeit von der Frequenz f;

Fig. 8     zeigt ein theoretisches Korrekturfilter K/dB zur Verkleinerung des Roll-Off-Faktors in Abhängigkeit von der Frequenz, und zwar für unterschiedliche Roll-Off-Faktoren $r = 0,5, 0,7$ und $0,9$;

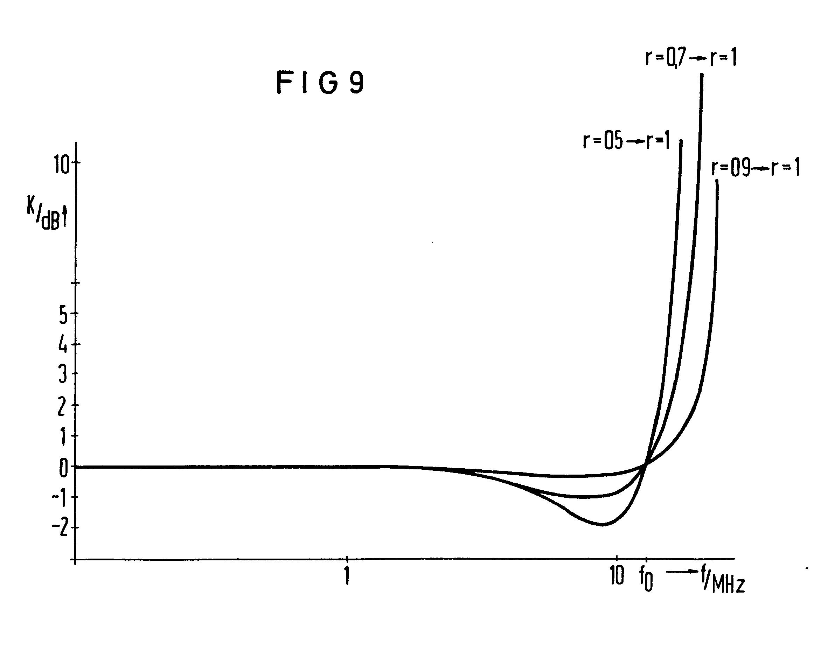

Fig. 9     zeigt in Abhängigkeit von der Frequenz f wiederum ein theoretisches Korrekturfilter K/dB zur Vergrößerung des Roll-Off-Faktors (auch hier die Nyquistfrequenz $f_0 = 12,88$ MHz);

Fig. 10    die gemessene Verstärkung $V_E/dB$ in Abhängigkeit von der Frequenz, und zwar die Kurve a, die Verstärkung des Dämpfungsentzerrers und die Kurve b, die Verstärkung des Dämpfungsentzerrers einschließlich des Roll-Off-Umwandlers;

Fig. 11    das gemessene Übertragungsmaß V/dB des gesamten Übertragungsweges, und zwar die Kurve a zeigt das Übertragungsmaß V von Leitung und Dämpfungsentzerrer und die Kurve b das Übertragungsmaß von Leitung, Dämpfungsentzerrer und Roll-Off-Umwandler;

Fig. 12 zeigt die gemessene Verstärkung V/dB des Roll-Off-Wandlers für einen Roll-Off-Faktor von R ≈ 0,7, der in einen Roll-Off-Faktor r ≈ 1 umgewandelt wird;

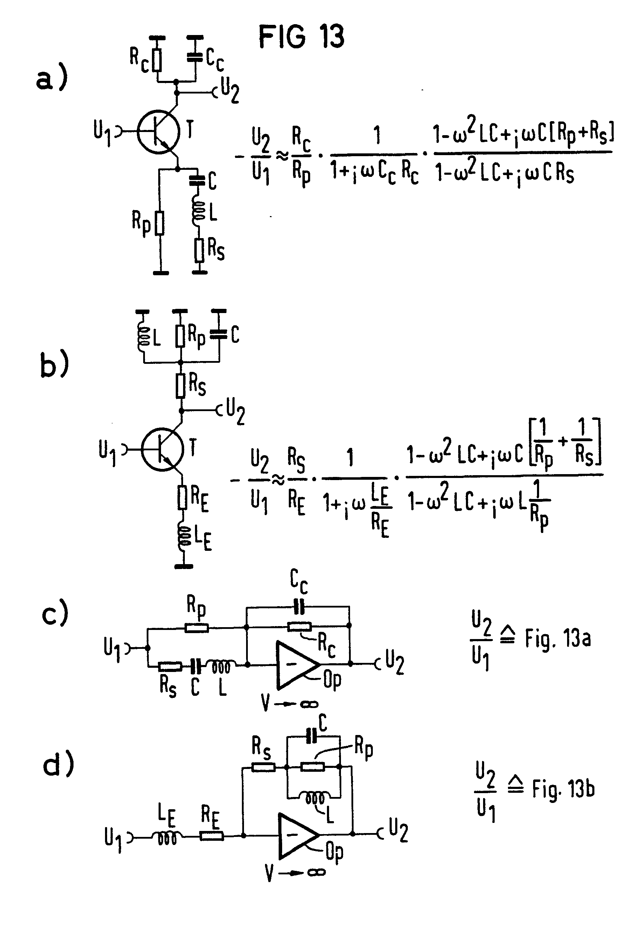

Fig. 13 zeigt einfache Realisierungsmöglichkeiten für einen Roll-Off-Wandler, wie er bei dem hier beschriebenen automatischen Entzerrer angewendet werden kann, und zwar Fig. 13a einen Transistor als aktives Element, Fig. 13b ebenfalls einen Transistor als aktives Element, wobei Figur 13b die zu Fig. 13a duale Schaltung darstellt, Fig. 13c einen Operationsverstärker (v → ∞) als aktives Element und Fig. 13d eine weitere Schaltungsmöglichkeit mit einem Operationsverstärker; das Übertragungsverhalten U2/U1 ist direkt dargestellt und es ist das Übertragungsmaß der Schaltung nach Fig. 13c gleich dem nach Fig. 13a, während das Übertragungsmaß der Schaltung nach Fig. 13d gleich dem nach Fig. 13b ist.

Zu den Blockschaltbildern in den Fig. 1 bis 3 und zu den in Fig. 13 dargestellten Entzerrerschaltungen sei kurz noch folgendes ausgeführt. Es ist dabei auch zu berücksichtigen, daß in den einzelnen Figuren wirkungsgleiche Elemente mit den gleichen Bezugsziffern versehen sind, so das insoweit die hierzu gegebenen Erläuterungen für alle Figuren Gültigkeit haben.

Im Blockschaltbild von Fig. 1 gelangt ein Datensignal 10 auf einen Entzerrer mit Bandbegrenzung, der dort die Bezugsziffer 1 hat. Am Ausgang dieses Entzerrers erscheint das Ausgangssignal E bzw. das Ausgangssignal E'. Das Ausgangssignal E wird einem Entscheider 3 zugeführt, dem ein Endverstärker 5 folgt. In einer Amplitudenregelschleife 2' wird das Ausgangssignal E auch einem Amplitudenregelkreis 2 zugeführt, von dem aus wiederum der bandbegrenzte Entzerrer 1 angesteuert wird. Ein weiteres Signal E' steuert einen Taktrückgewinnungsgenerator 4 an, der den Entscheider 3 steuert.

Eine ähnliche Anordnung ist auch in Fig. 2 zu erkennen, bei der wiederum das Eingangssignal mit 10 bezeichnet ist und das Ausgangssignal mit E. Die Amplitudenregelschleife 2' ist ebenfalls zu erkennen und das Signal E', das mit der Amplitudenregelschleife 2' in Verbindung steht. Abweichend von Fig. 1 wird nun im Schaltbild der Fig. 2 ein Korrekturfilter 6 im Signalweg vorgesehen, auf dessen Wirkung später ebenfalls noch eingegangen wird.

Im erfindungsgemäßen Ausführungsbeispiel von Fig. 3 liegt das Korrekturfilter 6 in der Amplitudenregelschleife 2'-2. Damit wird das Ausgangssignal E diesem Korrekturfilter zugeführt und gelangt dann in den Amplitudenregelkreis 2. Als Beispiel ist ein Roll-Off-Faktor r = 0,7 im Signalweg 10/E angenommen und ein Roll-Off-Faktor r ≈ 1 am Ausgang des Korrekturfilters 6 bzw. am Eingang des Amplitudenregelkreises 2. Auch dort ist es, wie im Ausführungsbeispiel der Fig. 2, möglich, ein Ausgangssignal E' nach dem Korrekturfilter 6 zur Verfügung zu stellen.

In Fig. 13 sind einfache Möglichkeiten gezeigt, mit denen die hier benötigte Übertragungsfunktion realisiert werden kann. Es muß dabei eine Tiefpaßfunktion und ein Resonanzverstärker mit einem seriell und parallel bedämpften Kreis in Erscheinung treten. In den in Fig. 13 gezeigten Schaltungen ist die Übertragungsfunktion U2/U1 unmittelbar an den einzelnen Schaltungen angegeben. U2 ist dabei die Ausgangsspannung, U1 die Eingangsspannung eines Verstärkers. In Fig. 13a ist als aktives Element ein Transistor T verwendet, an dessen Basis die Eingangsspannung U1 liegt. Im Emitterkreis liegt die Parallelschaltung aus einem Widerstand $R_p$ und eine Serienanordnung aus einem Kondensator C, einer Spule L und einem Verlustwiderstand $R_s$. Im Kollektorkreis liegt der Widerstand $R_c$ und der Kondensator $C_c$. In Fig. 13b ist eine mögliche Schaltung gezeichnet, die zu der in Fig. 13a gezeigten Schaltung dual ist. Aus diesem Grunde ist im Emitterkreis die Serienschaltung aus einem Widerstand $R_E$ und einer Spule $L_E$ vorgesehen, während im Kollektorkreis die Serienschaltung aus einem Widerstand $R_s$ und der nachgeschalteten Parallelschaltung aus einer Spule L, einem Widerstand $R_p$, und einem Kondensator C liegt.

In den Fig. 13c und 13d sind Verstärker verwendet, die den Charakter von Operationsverstärkern haben und deshalb mit dem Bezugszeichen Op versehen sind. Zur Verdeutlichung ist noch darauf hingewiesen, daß der Verstärkungsfaktor v gegen den Wert unendlich geht. In der Schaltung von Fig. 13c liegt im Gegenkoppelkreis, also zwischen dem Verstärkerausgang und dem Verstärkereingang, die Parallelschaltung aus einem Widerstand und einem Kondensator. Im Verstärkereingang liegt die Parallelschaltung aus einem Widerstand und einem bedämpften Serienresonanzkreis.

In der Schaltung von Fig. 13d - dual zu 13c - liegt im Gegenkopplungskreis die Serienschaltung aus einem ohmschen Widerstand, dem die Parallelschaltung aus einem Kondensator, einem Widerstand und einer Spule nachgeschaltet ist, während im Verstärkereingang die Serienschaltung aus einer Spule und einem Widerstand liegt.

Zur weiteren Erläuterung und zum besseren theoretischen Verständnis sei noch auf die nachstehenden Ausführungen hingewiesen.

Fig. 1 zeigt das Blockschaltbild eines üblichen Regenerators bestehend aus Leitungsdämpfungsentzerrer 1 mit Amplitudenregelkreis 2, Entscheider 3 mit Taktrückgewinnung 4 und Endverstärker 5.

Die zur Störminderung (Empfängerrauschen und Nebensprechstörer) notwendige Bandbegrenzung vor dem Entscheider wird üblicherweise nach der eingangs genannten Literaturstelle, als (angenäherte) Roll-Off-Bandbegrenzung ausgeführt. Übertragungssysteme für höhere Bitraten (z. B. 34 Mbit/s) sind bei den dort gegebenen Feldlängen und Sendeleistungen nur mit einem Roll-Off-Faktor r < 1 realisierbar.

Ein r < 1 führt aber zu Signalüberschwingern, deren Höhe von der Impulsfolge abhängig ist. Dies bedeutet, daß der Spitzenwertgleichrichter im Amplitudenregelkreis des Entzerrers für Zufallsfolgen einen anderen Wert als für eine feste Impulsfolge und für unterschiedliche Folgen auch unterschiedliche Werte liefert. Der automatische Entzerrer wird sich also (bei ausreichend langen Zeitkonstanten im Regelkreis) nur bei Zufallsfolgen oder einer bestimmten festen Folge auf den richtigen Wert einstellen.

Fig. 2 zeigt eine an sich bekannte Anordnung, die den Nachteil der impulsfolgeabhängigen Entzerrereinstellung vermeidet.

Der Entzerrer 1 beinhaltet eine Bandbegrenzung mit $r \approx 1$, sein Ausgangssignal (E) ist praktisch frei von Überschwingern.

Wahlweise kann die Taktrückgewinnung 4 zur Verkleinerung des Grundjitters des Regenerators auch von diesem Signal E abgeleitet werden.

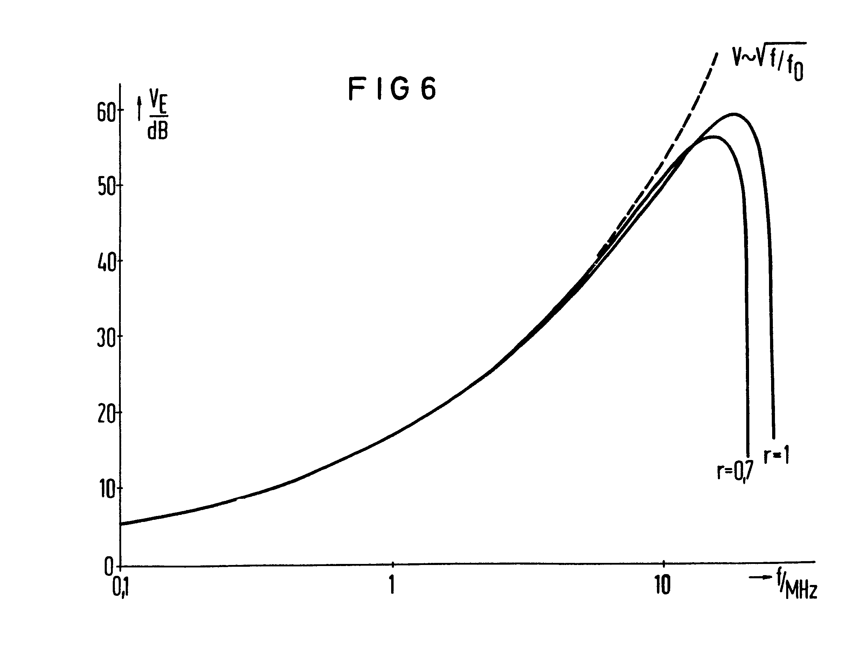

Im Signalweg folgt dem Entzerrer 1 ein zusätzliches Filter 6 (theoretischen Betrag der Übertragungsfunktion zeigt Fig. 6) mit linearer Phase zur Verkleinerung des Roll-Off-Faktors.

Die Nachteile der Anordnung nach den Fig. 1 und 2 sind insbesondere im folgenden zu sehen.

- Die maximale Verstärkung des entzerrenden Verstärkers für $r = 1$ ist größer und liegt bei einer höheren Frequenz als die eines Verstärkers für $r < 1$ (Fig. 7) und erfordert insbesondere bei hohen Bitraten (z. B. 140 Mbit/s) mehr Aufwand.
- Im Signalweg liegen 2 phasenentzerrte Filter, deren Toleranzen und Alterung direkt die Genauigkeit der Entzerrung (Knoten im Augenbild) und damit die Qualität des Regenerators beeinflussen.

Die erfindungsgemäße Anordnung nach Fig. 3 vermeidet diese Nachteile.

Das Korrekturfilter 6 zur Roll-Off-Wandlung liegt hier nicht im Signalweg, sondern im Amplitudenregelkreis 2, 2', weshalb geringere Anforderungen an die Genauigkeit der Korrektur zu stellen sind. Der Entzerrerverstärker 1 ist nur für eine Bandbegrenzung mit $1 < r$ zu realisieren.

Als Beispiel wird ein 34 Mbit/s-Theoretisches Übertragungssystem mit einer Kabeldämpfung $a_0 = 60$ dB bei der Nyquistfrequenz $f_0 = 12{,}88$ MHz angenommen.

Die theoretische Übertragungsfunktion des Leitungsdämpfungsentzerrers 1 ist

$$F_E(f) = \frac{Se(f)}{Ss(f)} \cdot \frac{1}{F_{Ltg}(f)}$$

mit dem gewünschten Empfangsspektrum eines Roll-Off-bandbegrenzten Impulses,

$$
\begin{aligned}
S_e(f) \quad &= A_e \cdot \tfrac{1}{2}\left[1 - \sin\tfrac{\pi}{2r}\left(\tfrac{f}{f_0} - 1\right)\right] \qquad &&\text{für } (1-r) < \tfrac{f}{f_0} < (1+r)\\
&= A_e &&\text{für } \tfrac{f}{f_0} < (1-r)\\
&= 0 &&\text{für } \tfrac{f}{f_0} > (1+r)
\end{aligned}
$$

($A_e$ ist die Empfangsamplitude, r der Roll-Off-Faktor) dem Spektrum eines der Realität angenäherten Sendeimpulses,

$$S_s(f) = A_s \cdot \frac{\sin \tfrac{\pi}{4} \cdot \tfrac{f}{f_0}}{\tfrac{\pi}{4} \cdot \tfrac{f}{f_0}} \cdot \frac{\cos \tfrac{\pi}{8} \cdot \tfrac{f}{f_0}}{1 - (\tfrac{1}{4} \cdot \tfrac{f}{f_0})^2}$$

($A_s$ ist die Sendeamplitude, der 2. Faktor ist das Spektrum eines idealen halbbitbreiten Rechteckimpulses, der 3. Faktor berücksichtigt kosinusförmige Flanken.) und der angenäherten Übertragungsfunktion einer Leitung.

$$F_{Ltg}(f) = 10^{-\tfrac{a}{20}} \text{ mit } a = a_0 \cdot \sqrt{\tfrac{f}{f_0}}$$

Fig. 6 zeigt das Verstärkungsmaß $V = 20 \cdot \log F_{E(f)}$ des Entzerrers für $r = 1$ und $r = 0{,}7$. Fig. 7 zeigt das Übertragungsmaß des gesamten Übertragungsweges $\ddot{u} = 20 \cdot \log (F_E \cdot F_{Ltg})$.

Für das Beispiel wird $r = 0{,}7$ gewählt.

Die theoretische Übertragungsfunktion $F_{K1}$ für das Korrekturfilter nach Fig. 2 zur Verkleinerung des Roll-Off-Faktors beträgt

$$F_{K1} = \frac{Se(r,f)}{Se(r=1,f)} = \frac{1 - \sin\tfrac{\pi}{2r} \cdot (\tfrac{f}{f_0} - 1)}{1 - \sin\tfrac{\pi}{2}(\tfrac{f}{f_0} - 1)} \quad \text{für } (1-r) < \tfrac{f}{f_0} < (1+r) = \frac{2}{1 - \sin\tfrac{\pi}{2}(\tfrac{f}{f_0} - 1)} \quad \text{für } \tfrac{f}{f_0} < (1-r)$$

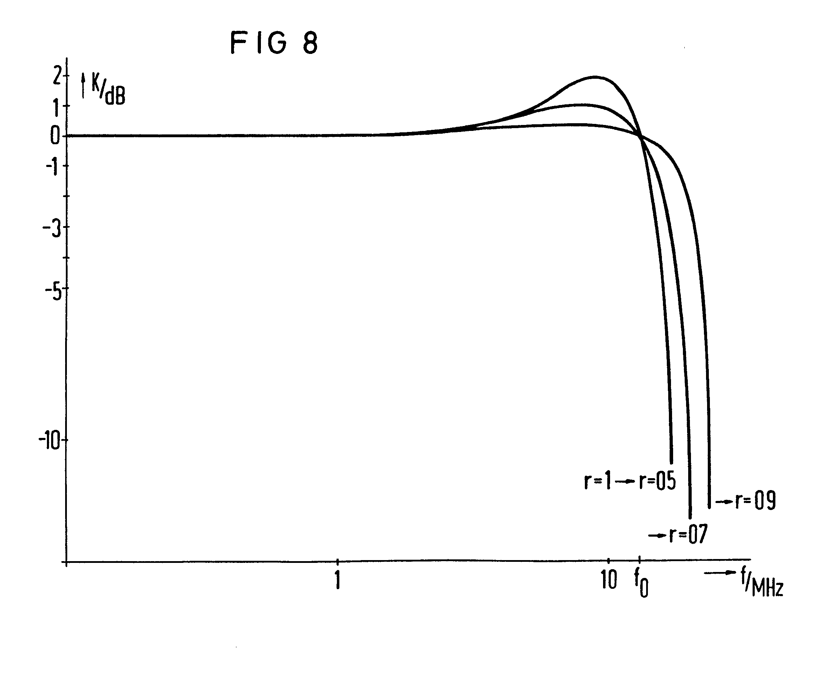

Fig. 8 zeigt $K = 20 \cdot \log F_{K1}$ für verschiedene r.

Die theoretische Übertragungsfunktion für das Korrekturfilter nach Fig. 3 zur Vergrößerung des Roll-Off-Faktors beträgt

$$F_K = \tfrac{1}{F_{K1}}$$

4

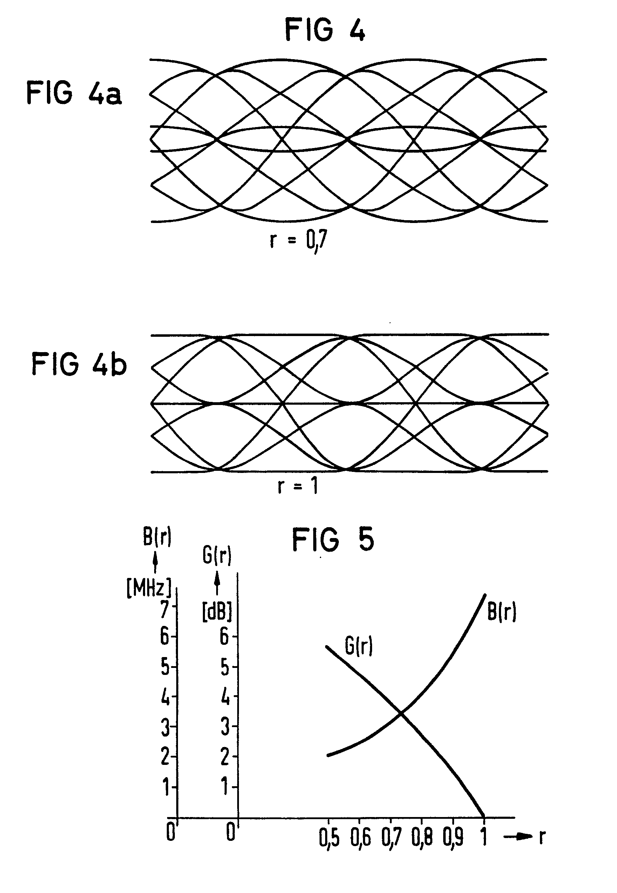

Fig. 5 zeigt $20 \cdot \log F_K$ für verschiedene r.

Betrachtet werden soll nun ein reales Übertragungssystem nach Fig. 3 mit einer Kabeldämpfung von 60 dB bei der Nyquistfrequenz $f_0 = 12,888$ MHz, da die vorstehend erläuterten, theoretischen Übertragungsfunktionen $F_E(f)$, $F_{K1}$ und $F_K$ sich natürlich nur näherungsweise erreichen lassen.

Die Leitungsdämpfungsentzerrer dieses Systems sind folgendermaßen zu realisieren.

Ein brauchbarer Kompromiß zwischen Aufwand und Genauigkeit der Entzerrung ist die Übertragungsfunktion

FIG00/35

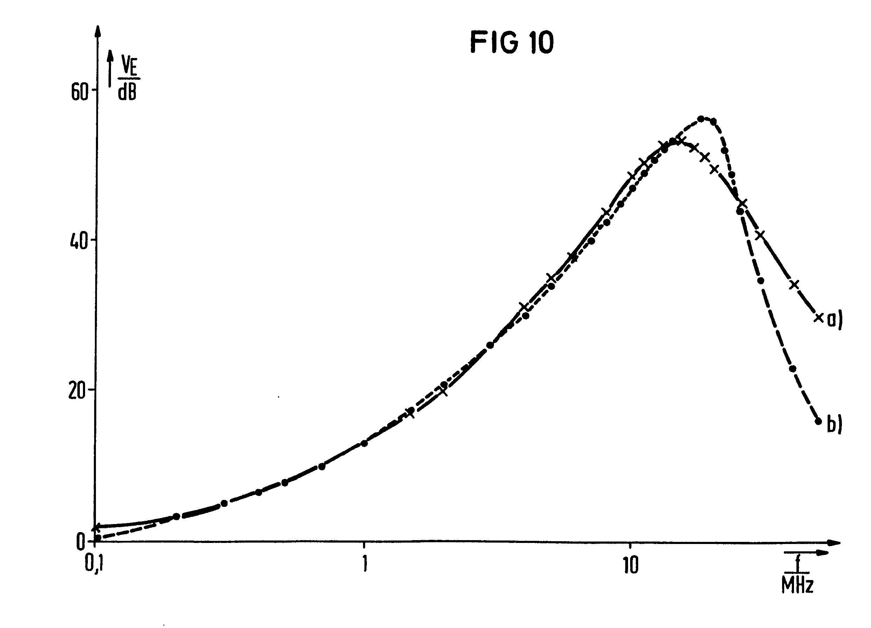

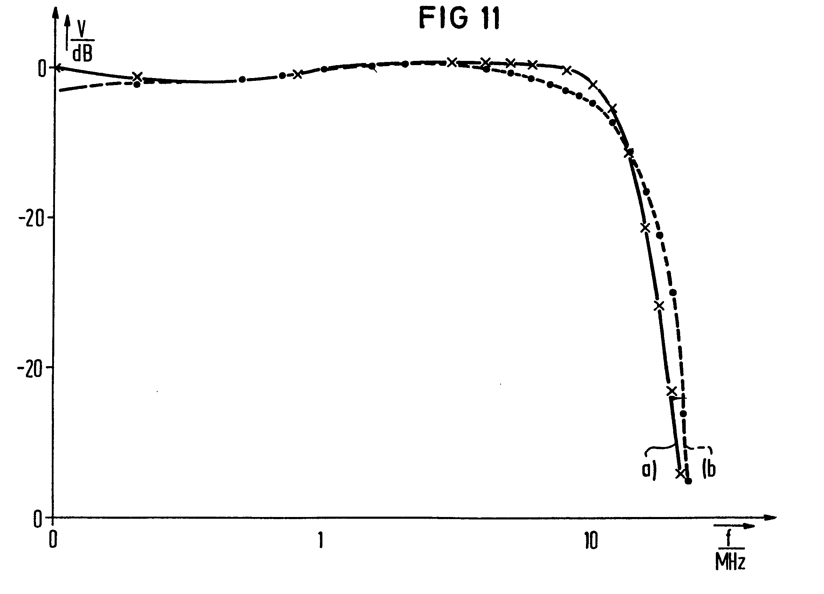

Sie ist im Ausführungsbeispiel verwirklicht durch 2 Resonanzverstärkerstufen mit einem seriell und parallel bedämpften Schwingkreis (Resonanzfrequenz $f_R$, Kreiskonstante a u. b), einem passiven Hochpaß (Eckfrequenzen $f_1$ und $f_2$) und einem passiven Allpaß (Kennfrequenz $f_a$) zur Linearisierung der Phase des Übertragungsweges. Fig. 10, Kurve a), zeigt die gemessene Verstärkung des Leitungsdämpfungsentzerrers. Fig. 11, Kurve a), die der Reihenschaltung Leitung + Dämpfungsentzerrer.

Der Roll-Off-Faktor ist $r \approx 0,7$.

Fig. 4a zeigt das zugehörige Augendiagramm für eine Pseudo-Zufalls-Impulsfolge mit seinen patternabhängigen Überschwingern.

Dieses Ausgangssignal ist als Regelkriterium zur Regelung eines variablen Dämpfungsentzerrers wenig geeignet.

Ein Entzerrer zur Roll-Off-Wandlung von $r \approx 0,7$ nach $r \approx 1$ wird folgendermaßen realisiert.

Das in Fig. 10 dargestellte theoretische Übertragungsmaß muß nur - wie die Messungen zeigen - bis etwa 10 dB Verstärkung angenähert werden. Dazu genügt die Übertragungsfunktion

$$\acute{e}\eta = V_0 \cdot \frac{1}{1+j\frac{f}{f_1}} \cdot \frac{1-(\frac{f}{f_R})^2 + ja\frac{f}{f_R}}{1-(\frac{f}{f_R})^2 + jb\frac{f}{f_R}}$$

Eine Phasenentzerrung ist nicht notwendig.

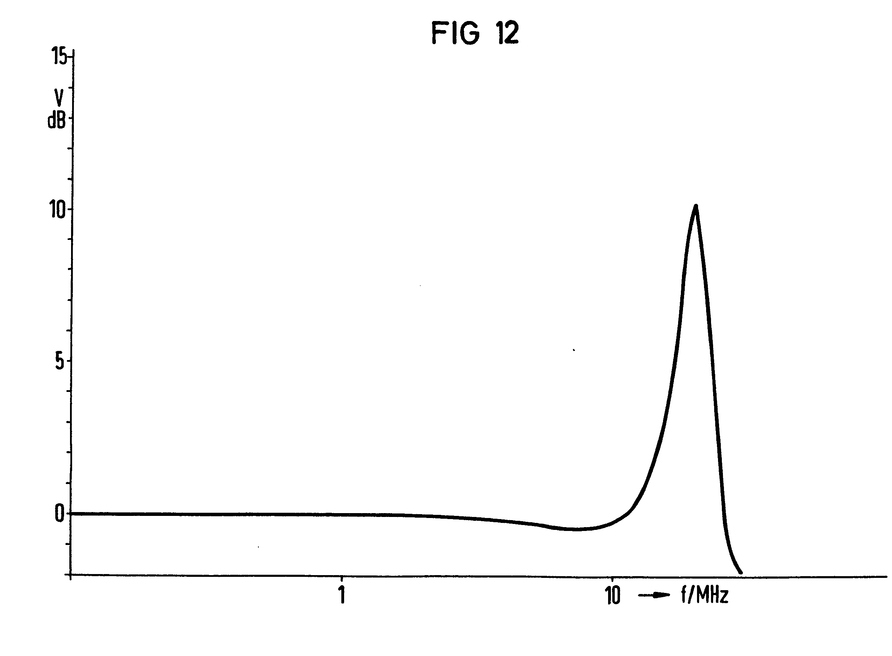

Fig. 12 zeigt das mit $f_1 = 12,3$ MHz, $f_R = 20$ MHz, $V_0 = 1$, $a = 1,17$ und $b = 0,16$ gemessene Übertragungsmaß.

Fig. 4b zeigt das nach dem Wandler gemessene Augendiagramm.

Dieses Signal ist als Regelkriterium geeignet.

Die vorstehend erwähnte Übertragungsmaß-Funktion setzt sich aus einem Tiefpaß und einem Resonanzverstärker mit einem seriell und parallel bedämpften Kreis zusammen.

Die eingangs schon beschriebene Figur 13 zeigt einfache Realisierungsmöglichkeiten hierfür.

**Patentansprüche**

1. Automatisch sich auf die Kabellänge einstellende Entzerreranordnung mit Bandbegrenzung für die Übertragung von Digitalsignalen, bestehend aus einem entzerrenden Verstärker (1), einem Korrekturfilter (6) und einer Amplitudenregelschleife (2, 2') mit Vergleich von Ist- und Sollgröße, bei der der entzerrende Verstärker (1) im Signalweg (10-E) liegt, dadurch gekennzeichnet, daß das Korrekturfilter (6) in der Amplitudenregelschleife (2, 2') liegt, derart, daß das Ausgangssignal dieses Korrekturfilters (6) die Istgröße für die Amplitudenregelschleife (2, 2') darstellt, und daß das Korrekturfilter (6) in seiner Schaltungskonfiguration und Bemessung derart gewählt ist, daß es folgende Übertragungsfunktion $\acute{e}\eta$ besitzt,

$$\acute{e}\eta = V_0 \cdot \frac{1}{1+j\frac{f}{f_1}} \cdot \frac{1-(\frac{f}{f_R})^2 + ja\frac{f}{f_R}}{1-(\frac{f}{f_R})^2 + jb\frac{f}{f_R}};$$

dabei ist $V_0$ eine Grundverstärkung, $f_1$ die Eckfrequenz eines Tiefpasses und $f_R$ die Resonanzfrequenz eines Schwingkreises und a und b seine Konstanten.

2. Entzerreranordnung nach Anspruch 1, dadurch gekennzeichnet, daß das Taktsignal, das zur Steuerung des dem Entzerrer (1) nachgeschalteten Entscheiders (3) verwendet wird, nach dem Korrekturfilter (6) abgeleitet ist.

**Claims**

1. Equalizing arrangement with automatic adaptation to the cable length, with band limiting for the transmission of digital signals, consisting of an equalizing amplifier (1), a correction filter (6) and an amplitude control loop (2, 2') with comparison of actual and nominal value, in which the equalizing amplifier (1) is located in the signal path (10-E), characterized in that the correction filter (6) is located in the amplitude control loop (2, 2'), in such a manner that the output signal of this correction filter (6) represents the actual value for the amplitude control loop (2, 2'), and in that the circuit configuration and dimensioning of the correction filter (6) is selected in such a manner that it has the following transfer function:

$$\partial \eta = V_0 \cdot \frac{1}{1+j\frac{f}{f_1}} \cdot \frac{1-(\frac{f}{f_R})^2 + ja\frac{f}{f_R}}{1-(\frac{f}{f_R})^2 + jb\frac{f}{f_R}}$$

where $V_0$ is a basic gain, $f_1$ is the cut-off frequency of a low-pass filter and $f_R$ is the frequency of resonance of a resonant circuit and a and b are its constants.

2. Equalizing arrangement according to Claim 1, characterized in that the clock signal, which is used for controlling the deciding circuit (3) following the equalizer (1) is extracted after the correction filter (6).

**Revendications**

1. Correcteur à adaptation automatique à la longueur d'un câble et à limitation de la bande de transmission de signaux numériques, constitué par un amplificateur de correction (1), un filtre de correction (6) et une boucle de régulation d'amplitude (2, 2') avec comparaison entre une grandeur réelle et une grandeur de consigne, et dans lequel l'amplificateur de correction (1) est situé dans la voie (10-E) de transmission des signaux, caractérisé par le fait que le filtre de correction (6) est situé dans la boucle de régulation d'amplitude (2, 2') de telle sorte que le signal de sortie de ce filtre de correction (6) représente la grandeur réelle pour la boucle de régulation d'amplitude (2, 2'), et que la configuration de circuit et le dimensionnement du filtre de correction (6) sont choisis de manière que ce dernier possède la fonction de transfert $\partial \eta$ suivante:

$$\partial \eta = V_0 \cdot \frac{1}{1+j\frac{f}{f_1}} \cdot \frac{1-(\frac{f}{f_R})^2 + ja\frac{f}{f_R}}{1-(\frac{f}{f_R})^2 + jb\frac{f}{f_R}}$$

$V_0$ représentant l'amplification de base, $f_1$ la fréquence limite d'un filtre passe-bande, $f_R$ la fréquence de résonance d'un circuit oscillant et a et b les constantes de ce circuit.

2. Correcteur suivant la revendication 1, caractérisé par le fait que le signal de cadence qui est utilisé pour commander le circuit de décision (3) branché en aval du correcteur (1), est obtenu en aval du filtre de correction (6).

## FIG 1

## FIG 2

## FIG 3

1

# FIG 4

## FIG 4a

r = 0,7

## FIG 4b

r = 1

# FIG 5

B(r) [MHz]

G(r) [dB]

G(r)

B(r)

0,5  0,6  0,7  0,8  0,9  1  → r

FIG 6

FIG 7

$\ddot{U} = 20 \log |S_e/S_s|$ ; $A_S/A_E = 1$

$S_S(f)$ ○———[ Ltg ]———[ ∫a ]———○ $S_e(f)$

$-A_S$

|T/2|

Sendeimpuls

$-A_E$

0 T 2T 3T

Empfängerimpuls

r=1

r=07

1     10   ⟶ f/MHz

EP 0 109 045 B1

FIG 8

EP 0 109 045 B1

FIG 9

FIG 10

FIG 11

EP 0 109 045 B1

FIG 12

EP 0 109 045 B1

# FIG 13

**a)**

$$-\frac{U_2}{U_1} \approx \frac{R_C}{R_p} \cdot \frac{1}{1+_i\omega C_C R_C} \cdot \frac{1-\omega^2 LC +_i\omega C[R_p+R_S]}{1-\omega^2 LC +_i\omega C R_S}$$

**b)**

$$-\frac{U_2}{U_1} \approx \frac{R_S}{R_E} \cdot \frac{1}{1+_i\omega \frac{LE}{R_E}} \cdot \frac{1-\omega^2 LC +_i\omega C\left[\frac{1}{R_p}+\frac{1}{R_S}\right]}{1-\omega^2 LC +_i\omega L\frac{1}{R_p}}$$

**c)**

$$\frac{U_2}{U_1} \triangleq \text{Fig. 13a}$$

**d)**

$$\frac{U_2}{U_1} \triangleq \text{Fig. 13b}$$